# EUROPEAN PATENT SPECIFICATION

(11) **EP 4 274 280 B1**
(45) Date of publication and mention of the grant of the patent: **24.09.2025**
(21) Application number: 23171652.3
(22) Date of filing: 04.05.2023
(51) Int. Cl.: H04W 8/18, H04W 48/18, H04W 60/04

(54) **MAXIMUM NUMBER OF PDU SESSION HANDLING PER SUBSCRIPTION PER NETWORK**
MAXIMALE ANZAHL VON PDU-SITZUNGSHANDHABUNG PRO ABONNEMENT PRO NETZWERK
GESTION DE SESSION PDU EN NOMBRE MAXIMAL PAR ABONNEMENT PAR RÉSEAU

(30) Priority: 05.05.2022 US 202263338499 P; 14.04.2023 US 202318134845
(43) Date of publication of application: 08.11.2023
(73) Proprietor: MEDIATEK INC., Hsinchu City 30078 (TW)
(72) Inventor: LIN, Yu-Chieh, Hsinchu City (TW)
(74) Representative: Patentship Patentanwaltsgesellschaft mbH

(56) References cited:
- EP-A1- 2 453 698
- EP-A1- 3 800 917
- WO-A1-2020/155021
- WO-A1-2020/250664
- WO-A1-2021/092561
- US-A1- 2021 105 712

## Description

### TECHNICAL FIELD

The disclosed embodiments relate generally to wireless mobile communication network, and, more particularly, to methods for handling maximum number of PDU sessions per subscription per network.

### BACKGROUND

A Public Land Mobile Network (PLMN) is a network established and operated by an administration or recognized operating agency (ROA) for the specific purpose of providing land mobile communication services to the public. PLMN provides communication possibilities for mobile users. A PLMN may provide service in one or a combination of frequency bands. Access to PLMN services is achieved by means of an air interface involving radio communications between mobile phones and base stations with integrated IP network services. One PLMN may include multiple radio access networks (RAN) utilizing different radio access technologies (RAT) for accessing mobile services. A radio access network is part of a mobile communication system, which implements a radio access technology. Conceptually, RAN resides between a mobile device and provides connection with its core network (CN). Depending on the standard, mobile phones and other wireless connected devices are varyingly known as user equipment (UE, i.e., MS), terminal equipment (TE), mobile stations (MS, i.e., UE), mobile termination (MT), etc. Examples of different RATs include 2G GERAN (GSM) radio access network, 3G UTRAN (UMTS) radio access network, 4G E-UTRAN (LTE), 5G new radio (NR) radio access network, NG-RAN (Next-Generation RAN), and other non-3GPP access RAT including WiFi.

As compared to PLMN, a non-public network (NPN) is a network for non-public use. An NPN is either a Stand-alone Non-Public Network (SNPN), i.e., operated by an NPN operator and not relying on network functions provided by a PLMN; or a Public Network Integrated NPN (PNI-NPN), i.e., a non-public network deployed with the support of a PLMN. A Credentials Holder (CH) may authenticate and authorize access to an SNPN separate from the Credentials Holder. The combination of a PLMN ID and Network identifier (NID) identifies an SNPN.

In 5GS, a protocol data unit (PDU) session defines the association between the UE and the data network that provides a PDU connectivity service. The PDU session establishment is a parallel procedure of PDN connection (bearer) procedure in 4G/LTE. Each PDU session is identified by a PDU session ID (PSI), and may include multiple QoS flows and QoS rules. Each PDU session can be established via a 5G access network (e.g.,3GPP radio access network (RAN), or via a non-3GPP access). The network and /or the UE can initiate different PDU session procedures, e.g., PDU session establishment, PDU session modification, and PDU session release, for managing the activation and deactivation of 5GS PDU sessions.

The UE can only establish a maximum number of PDU sessions in a PLMN or SNPN. When the number of active 5GS PDU sessions reach the network's (PLMN or SNPN) maximum number of 5GS PDU sessions, then UE should not send request to establish additional PDU sessions. If UE supports access to an SNPN using credentials from a Credential Holder, a solution is sought on how to handle and maintain the maximum number of PDU sessions when UE uses different subscriptions to access the SNPN.

US 2021/105712 A1 discloses techniques and apparatuses for standalone non-public network access. WO 2020/155021 A1 discloses a method for session establishment and a terminal device. In this document, in a process of establishing a PDU session by a terminal device, when the network device receives a request message sent by the terminal device requesting the establishment of a PDU session, if it is determined that the maximum number of PDU sessions supported by the terminal device under the PLMN has reached, the network device sends instruction information to notify the terminal device that the number of PDU sessions currently established has reached the maximum number of PDU sessions supported by the terminal device under the PLMN. WO 2021/092561 A1 discloses a session management for a network slice. EP 2 453 698 A1 discloses a method for network selection to provide an enhanced number of IP sessions.

### SUMMARY

The invention is set out in the appended claims. Other embodiments and advantages are described in the detailed description below.

### BRIEF DESCRIPTION OF THE DRAWINGS

Figure 1 schematically shows a communication system having a Public Land Mobile Network (PLMN), a Stand-alone Non-public Network (SNPN), and a Public Network Integrated NPN (PNI-NPN) supporting (hosting) network and cell selection with Localized services in accordance with one novel aspect.
Figure 2 illustrates simplified block diagrams of a user equipment and a network entity in accordance with embodiments of the current invention.
Figure 3A illustrates a first embodiment of a 5G system architecture with access to SNPN using credentials from credentials holder.
Figure 3B illustrates a second embodiment of a 5G system architecture with access to SNPNs using credentials from credentials holder.
Figure 4 illustrates an example of NG-RAN modes which broadcast certain information in order to provide access to SNPNs.
Figure 5A illustrates an example of an SNPN-enabled UE that is configured with 2 SNPN subscriptions (i.e., 2 subscribed SNPNs in the "list of subscriber data").
Figure 5B illustrates an example of an SNPN-enabled UE that is configured with 2 PLMN subscriptions (i.e., 2 USIMs).
Figure 6 illustrates Network selection in SNPN access mode with automatic SNPN network selection and manual SNPN network selection.
Figure 7 illustrates an embodiment of UE registering to a selected SNPN using a selected subscription from multiple SNPN or PLMN subscriptions.
Figure 8 is a flow chart of a method of using multiple subscriptions to register to a selected SNPN and corresponding maximum number of PDU session handling in accordance with one novel aspect.

### DETAILED DESCRIPTION

Reference will now be made in detail to some embodiments of the invention, examples of which are illustrated in the accompanying drawings.

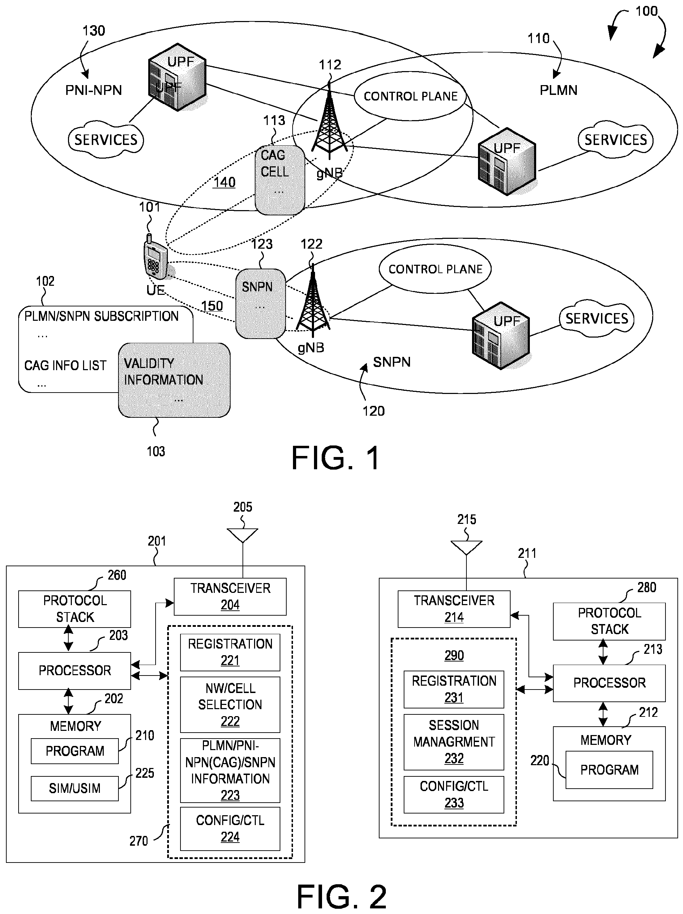

Figure 1 schematically shows a communication system 100 having a Public Land Mobile Network (PLMN) 110, a Stand-alone Non-public Network (SNPN) 120, and a Public Network Integrated NPN (PNI-NPN)/CAG 130 providing access for Localized services in accordance with one novel aspect. PLMN network 110 comprises control plane functionalities, user plane functionality (e.g., UPF), and applications that provides various services by communicating with a plurality of user equipments (UEs) including UE 101. Serving base station gNB 112 belong to part of a radio access network RAN 140. RAN 140 provides radio access for UE 101 via a radio access technology (RAT). An access and mobility management function (AMF) in PLMN 110 communicates with gNB 112. UE 101 may be equipped with a radio frequency (RF) transceiver or multiple RF transceivers.

SNPN network 120 comprises control plane functionalities, user plane functionality (e.g., UPF), and applications that provides various services by communicating with a plurality of user equipments (UEs) including UE 101. The combination of a PLMN ID and Network identifier (NID) identifies an SNPN. Serving base station gNB 122 belongs to part of RAN 150. RAN 150 provides radio access for UE 101 via a RAT. An AMF in SNPN 120 communicates with gNB 122. SNPN 120 is operated by an NPN operator and does not rely on network functions provided by a public network. A Credentials Holder (CH) may authenticate and authorize access to an SNPN separate from the Credentials Holder. NG-RAN nodes which provide access to SNPNs broadcast the following information: One or multiple PLMN IDs, and a List of NIDs per PLMN ID identifying the non-public networks NG-RAN provides access to (123). An SNPN-enabled UE is configured with PLMN ID and NID (SNPN ID) of the subscribed SNPN, and an SNPN-enabled UE that supports access to an SNPN using credentials from a Credentials Holder may additionally be configured with information for SNPN selection (SNPN selection information or configuration) and registration using the SNPN subscription or using PLMN subscription (USIM) (in SNPN access mode) (102).

PNI-NPN (CAG) network 130 comprises control plane functionalities (optional, it may rely on PLMN's control plane functionality), user plane functionality (optional, it may rely on PLMN's user plane functionality), and applications that provides various services by communicating with a plurality of user equipments (UEs) including UE 101. PNI-NPN (CAG) 130 is a non-public network deployed with the support of a PLMN, e.g., PLMN 110, by sharing e.g., RAN/gNB 112 and e.g., control plane functionalities. A Closed Access Group (CAG) identifies a group of subscribers who are permitted to access one or more CAG cells associated to the CAG. CAG is used for the PNI-NPNs to prevent UE(s), which are not allowed to access the NPN via the associated cell(s), from automatically selecting and accessing the associated CAG cell(s). A CAG is identified by a CAG Identifier which is unique within the scope of a PLMN ID. A CAG cell broadcasts one or multiple CAG Identifiers per PLMN (113), and a UE is configured with CAG related configuration/information (e.g., an (enhanced) CAG information list containing list of allowed CAGs per PLMN) (102).

Local or Localized services are services that are localized (i.e., provided at specific/limited area and/or are bounded in time (a specific period of time)). A localized service provider is an application provider or a network operator who makes their services localized and to be offered to end user via a hosting network. A hosting network is a network that provides access for localized services and can be an SNPN or a PNI-NPN, while a home network is network owning the current in use subscription or credential of the UE. In the example of Figure 1, both SNPN 120 and PNI-NPN (CAG) 130 can be a hosting network providing access for Localized services to UE 101.

A URSP rule may include an association of the UE application and the DNN or network slice which is meant for a specific localized service. A URSP rule can also include "Route Selection Validity Criteria" (Time Window and/or a Location Criteria Validity Conditions) with the time/location defined for the specific localized service. The LADN (Local Access Data Network) can also be used for enabling the UE access to localized service.

To enable a PNI-NPN or SNPN to provide access to localized services, the PNI-NPN or SNPN operator configures the network with information enabling the UEs to access the localized services according to validity of the localized services, and the information is determined in agreement with the localized service provider, e.g.: (a) Identification of each localized service, e.g. to be used in URSP rules; (b) validity criteria/restriction for each localized service, e.g., the validity of time duration and/or (area of) location.

When localized services in a network are completed, all UEs registered with the network are expected to be moved to other network or to other cells within the same network. The other network can be HPLMN, VPLMN or another SNPN. UE can stop using the network resources for localized services for numerous reasons, e.g.: (a) Localized services in a network are completed; (b) Validity conditions of network selection information are no longer met; (c) The user decides to stop using the localized services before they are completed (e.g., end user disables to access Localized services); (d) A policy decision is taken by the network, with the effect that the UE is deregistered before the localized services are completed. Validity information or restrictions or criteria or conditions (103) are provided or configured to UE as part of the localized service information, which are used to restrict the UE's access of the SNPN/PNI-NPN (as hosting network) providing access for Localized services. For providing localized services to UE, UE needs to be able to discover, select and access a SNPN/PNI-NPN (as hosting network) providing access for the Localized services. The discovery mechanism is based on provisioning or configuring the UE with appropriate information.

Figure 2 illustrates simplified block diagrams of wireless devices, e.g., a UE 201 and network entity 211 in accordance with embodiments of the current invention. Network entity 211 may be a base station combined with an AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes a set of control functional modules and circuit 290. Registration circuit 231 handles registration and mobility procedure. Session management circuit 232 handles session management functionalities. Configuration and control circuit 233 provides different parameters to configure and control UE.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, system modules and circuits 270 comprise registration circuit 221 that performs registration and mobility procedure with the network, a network and cell selection circuit 222 for performing network and cell selection, a PLMN/PNI-NPN(CAG)/SNPN information maintenance circuit 223 that handles the adding, removing, and resetting of one or more PLMN/PNI-NPN (CAG) /SNPN information in SIM/USIM and/or in UE (non-volatile) memory (source of the information may come from signaling as well), a config and control circuit 224 that handles configuration and control parameters. Note that the network selection and registration related information, such as HPLMN, Operator Controlled PLMN/SNPN Selector list, User Controlled PLMN/SNPN Selector list, may be stored in SIM/USIM 225 and/or in UE (non-volatile) memory.

### SNPN

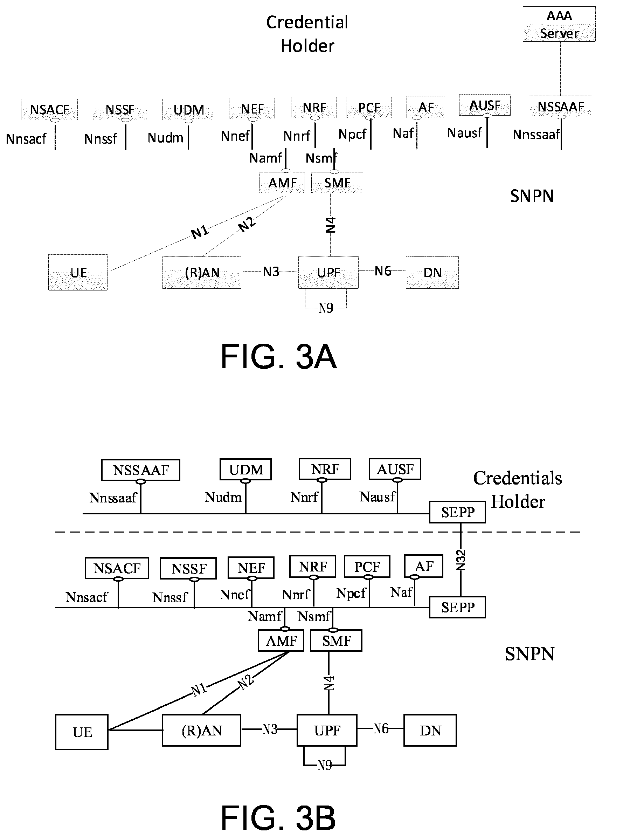

Figure 3A illustrates a first embodiment of a 5G system architecture with access to SNPN using credentials from credentials holder. Figure 3A depicts the 5G System architecture for SNPN with Credentials Holder using AAA Server for primary authentication and authorization. The AUSF and the UDM in SNPN may support primary authentication and authorization of UEs using credentials from a AAA Server in a Credentials Holder (CH). The SNPN in Figure 3A can be the subscribed SNPN for the UE (i.e. NG-RAN broadcasts SNPN ID of the subscribed SNPN). As a deployment option, the SNPN in Figure 3A can also be another SNPN than the subscribed SNPN for the UE (i.e. none of the SNPN IDs broadcast by NG-RAN matches the SNPN ID corresponding to the subscribed SNPN). The NSSAAF deployed in the SNPN can support primary authentication in the SNPN using credentials from Credentials Holder using a AAA Server (as depicted) and/or the NSSAAF can support Network Slice-Specific Authentication and Authorization with a Network Slice-Specific AAA Server (not depicted).

Figure 3B illustrates a second embodiment of a 5G system architecture with access to SNPNs using credentials from credentials holder. Figure 3B depicts the 5G System architecture for SNPN with Credentials Holder using AUSF and UDM for primary authentication and authorization and network slicing. An SNPN may support primary authentication and authorization of UEs that use credentials from a Credentials Holder using AUSF and UDM. The Credentials Holder may be an SNPN or a PLMN. The Credentials Holder UDM provides to SNPN the subscription data.

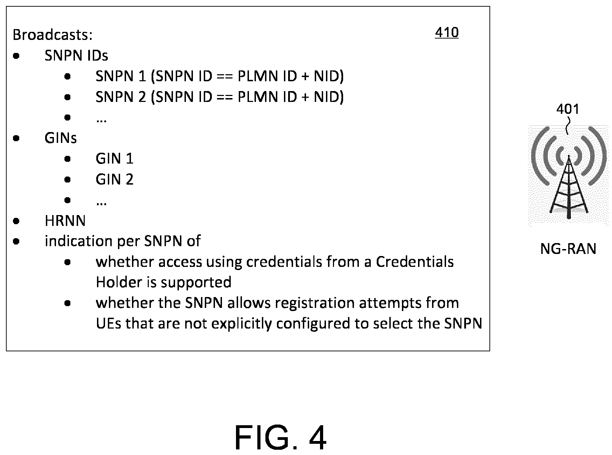

Figure 4 illustrates an example of NG-RAN mode(s) which broadcasts certain information in order to provide access to SNPNs. A Credentials Holder (CH) may authenticate and authorize access to an SNPN separate from the Credentials Holder. For SNPN identification, the combination of a PLMN ID and Network identifier (NID) identifies an SNPN. The NID supports two assignment models. Under self-assignment model, NIDs are chosen individually by SNPNs at deployment time (and may therefore not be unique) but use a different numbering space than the coordinated assignment NIDs. Under coordinated assignment model, NIDs are assigned using one of the following two options: 1) The NID is assigned such that it is globally unique independent of the PLMN ID used; or 2) The NID is assigned such that the combination of the NID and the PLMN ID is globally unique.

The Group IDs for Network Selection (GIN) supports two assignment models. Under self-assignment model, GINs are chosen individually and may therefore not be unique. Under coordinated assignment model, GIN uses a combination of PLMN ID and NID and is assigned using one of the following two options: 1) The GIN is assigned such that the NID is globally unique (e.g., using IANA Private Enterprise Numbers) independent of the PLMN ID used; or 2) The GIN is assigned such that the combination of the NID and the PLMN ID is globally unique.

In the example of Figure 4, NG-RAN 401 provides access to SNPNs and broadcasts the following information (410): One or multiple PLMN IDs and List of NIDs per PLMN ID identifying the non-public networks the NG-RAN provides access to (e.g., SNPN 1 and SNPN 2). Optionally, the broadcasted information further includes the following: a human-readable network name (HRNN) per SNPN; an indication per SNPN of whether access using credentials from a Credentials Holder is supported; a list of supported Group IDs for Network Selection (GINs) per SNPN (e.g., GIN 1 and GIN 2); and an indication per SNPN of whether the SNPN allows registration attempts from UEs that are not explicitly configured to select the SNPN, i.e., UEs that do not have any SNPN ID (PLMN ID + NID) nor GIN broadcast by the SNPN in the Credentials Holder controlled prioritized lists of preferred SNPNs/GINs.

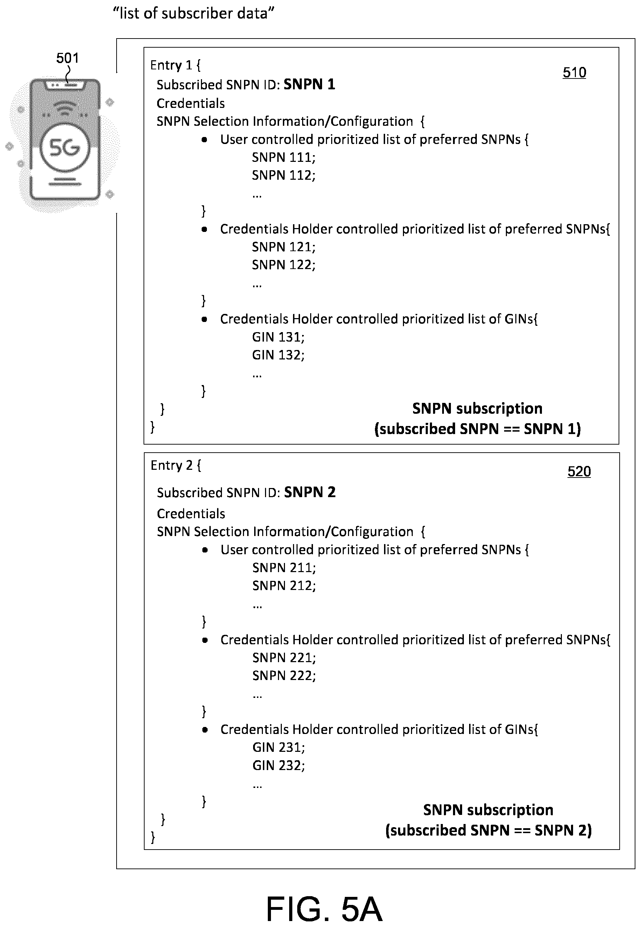

Figure 5A illustrates an example of an SNPN-enabled UE that is configured with SNPN subscription information for each subscribed SNPN. In the example of Figure 5A, an SNPN-enabled UE 501 is configured with the 2 SNPN subscriptions as depicted by 510/520 for each subscribed SNPN: SNPN ID (PLMN ID + NID) of the subscribed SNPN (e.g., SNPN 1 in Entry 1 of the "list of subscriber data", SNPN 2 in Entry 2 of the "list of subscriber data"); and Subscription identifier (SUPI) and credentials for each of the subscribed SNPN. If the UE supports access to an SNPN using credentials from a Credentials Holder for each subscribed SNPN: 1) User controlled prioritized list of preferred SNPNs (e.g., SNPN 111, SNPN 112 for Entry 1; SNPN 211, SNPN 212 for Entry 2); 2) Credentials Holder controlled prioritized list of preferred SNPNs (e.g., SNPN 121, SNPN 122 for Entry 1; SNPN 221, SNPN 222 for Entry 2); and 3) Credentials Holder controlled prioritized list of GINs (e.g., GIN131, GIN132 for Entry 1; GIN 231, GIN 232 for Entry 2).

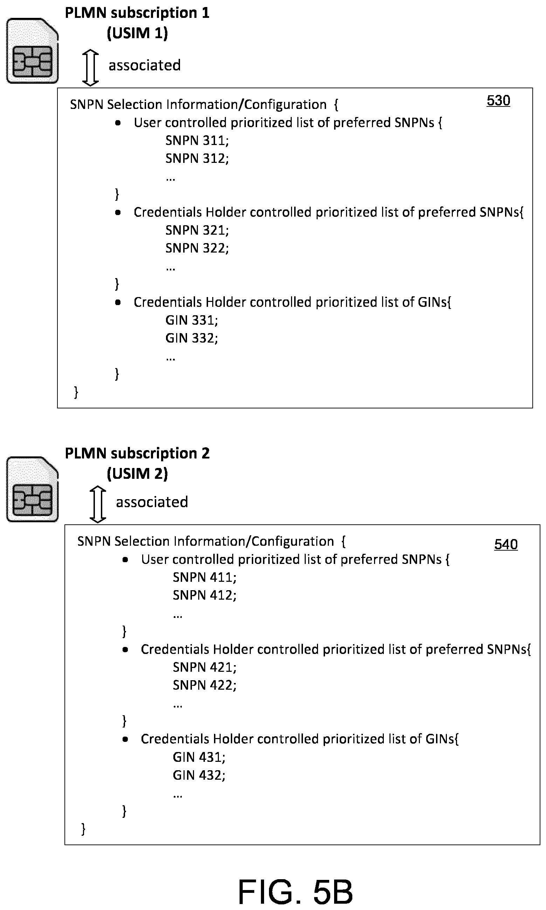

Figure 5B illustrates an example of an SNPN-enabled UE that is configured with 2 PLMN subscriptions (i.e., 2 USIMs). An SNPN-enabled UE that supports access to an SNPN using credentials from a Credentials Holder and that is equipped with a PLMN subscription (USIM) may additionally be configured with information for SNPN selection and registration using the PLMN subscription (in SNPN access mode). For example, PLMN subscription 1 is associated with information for SNPN selection 530: 1) User controlled prioritized list of preferred SNPNs (e.g., SNPN 311, SNPN 312); 2) Credentials Holder controlled prioritized list of preferred SNPNs (e.g., SNPN 321, SNPN 322); and 3) Credentials Holder controlled prioritized list of GINs (e.g., GIN 331, GIN 332). Similarly, PLMN subscription 2 is associated with information for SNPN selection 540: 1) User controlled prioritized list of preferred SNPNs (e.g., SNPN 411, SNPN 412); 2) Credentials Holder controlled prioritized list of preferred SNPNs (e.g., SNPN 421, SNPN 422); and 3) Credentials Holder controlled prioritized list of GINs (e.g., GIN 431, GIN 432).

A subscription of an SNPN is either identified by a SUPI containing a network-specific identifier that takes the form of a Network Access Identifier (NAI). The realm part of the NAI may include the NID of the SNPN; or identified by a SUPI containing an IMSI. For an SNPN-enabled UE with SNPN subscription, the Credentials Holder controlled prioritized lists of preferred SNPNs/GINs may be updated by the CH using the Steering of Roaming (SoR) procedure. For an SNPN-enabled UE with PLMN subscription, the Credentials Holder controlled prioritized lists of preferred SNPNs/GINs may be updated by the CH using the Steering of Roaming (SoR) procedure. When the Credentials Holder updates a UE with the Credentials Holder controlled prioritized lists of preferred SNPNs and GINs, the UE may perform SNPN selection again, e.g., to potentially select a higher prioritized SNPN.

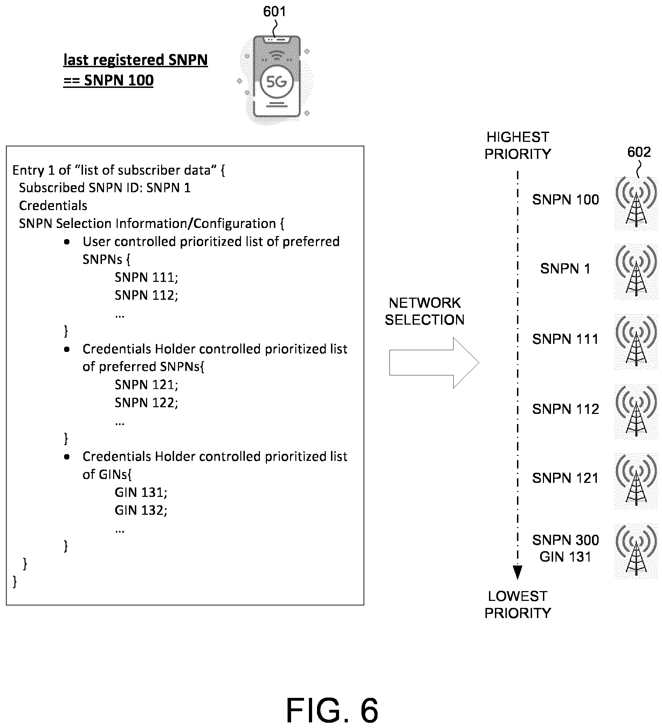

Figure 6 illustrates Network selection in SNPN access mode with automatic SNPN network selection and manual SNPN network selection. An SNPN-enabled UE 601 supports to access SNPN (in SNPN access mode). When the UE is set to operate in SNPN access mode the UE only selects and registers with SNPNs. When a UE is set to operate in SNPN access mode the UE does not perform normal PLMN selection procedures. There are two SNPN network selection procedures: an automatic SNPN network selection procedure and a manual SNPN network selection procedure.

Under automatic SNPN network selection, UE selects and attempts registration on available and allowable SNPNs in the following order: 1) the SNPN the UE was last registered with (if available) or the equivalent SNPN (if available); 2) the subscribed SNPN, which is identified by the SNPN ID (PLMN ID + NID) for which the UE has SUPI and credentials; 3) if the UEs supports access to an SNPN using credentials from a Credentials Holder then the UE continues by selecting and attempting registration on available and allowable SNPNs which broadcast the indication that access using credentials from a Credentials Holder is supported in the following order: a) SNPNs in the user controlled prioritized list of preferred SNPNs (in priority order); b) SNPNs in the Credentials Holder controlled prioritized list of preferred SNPNs (in priority order); c) SNPNs, which additionally broadcast a GIN contained in the Credentials Holder controlled prioritized list of preferred GINs (in priority order); and 4) SNPNs, which additionally broadcast an indication that the SNPN allows registration attempts from UEs that are not explicitly configured to select the SNPN, i.e. the broadcasted SNPN ID or GIN is not present in the Credentials Holder controlled prioritized lists of preferred SNPNs/GINs in the UE.

In the example of Figure 6, UE 601 was registered to SNPN 100, the subscribed SNPN is SNPN 1 and has three lists for credentials. The User controller prioritized list of preferred SNPNs includes SNPN 111, SNPN 112; the Credential Holder controlled prioritized list of preferred SNPNs includes SNPN 121, SNPN 122; the Credential Holder controlled prioritized list of GINs includes GIN 131, GIN 132. There are a list of SNPNs/GINs (broadcasted by one or more NG-RANs) available in current UE location e.g., SNPN 100, SNPN 1, SNPN 111, SNPN 112, SNPN 121, SNPN 300/GIN 131. UE 601 selects and attempts to register to an SNPN in the following preference/priority order: SNPN 100, SNPN 1, SNPN 111, SNPN 112, SNPN 121, and SNPN 300 which also broadcasts GIN 131.

Under manual network selection, UEs operating in SNPN access mode provide to the user the list of SNPNs (each is identified by a PLMN ID and NID) and related human-readable network names (if available) of the available SNPNs the UE has respective SUPI and credentials for. If the UEs supports access to an SNPN using credentials from a Credentials Holder, the UE also presents available SNPNs which broadcast the "access using credentials from a Credentials Holder is supported" indication and the human-readable names related to the SNPNs (if available). When a UE performs Initial Registration to an SNPN, the UE shall indicate the selected PLMN ID and NID as broadcast by the selected SNPN to NG-RAN. NG-RAN shall inform the AMF of the selected PLMN ID and NID.

If a UE performs the registration or service request procedure in an SNPN identified by a PLMN ID and a self-assigned NID and there is no subscription for the UE, then the AMF shall reject the UE with an appropriate cause code to temporarily prevent the UE from automatically selecting and registering with the same SNPN. If a UE performs the registration or service request procedure in an SNPN identified by a PLMN ID and a coordinated assigned NID and there is no subscription for the UE, then the AMF shall reject the UE with an appropriate cause code to permanently prevent the UE from automatically selecting and registering with the same SNPN. If a UE performs the registration in an SNPN using credentials from a Credentials Holder and UE is not authorized to access that specific SNPN, then the UDM can reject the UE which results in AMF rejecting the registration request from the UE with an appropriate cause code to prevent the UE from selecting and registering with the same SNPN using credentials from the Credentials Holder. In order to prevent access to SNPNs for authorized UE(s) in the case of network congestion/overload, Unified Access Control information is configured per SNPN (i.e., as part of the subscription information that the UE has for a given SNPN) and provided to the UE.

### Maximum Number of PDU Session

An SNPN-enabled UE can be configured with SNPN subscription information for each subscribed SNPN. If the UE supports access to an SNPN using credentials from a Credentials Holder for each subscribed SNPN, then for each subscribed SNPN, the SNPN subscription comprises an SNPN ID of the subscribed SNPN, credentials, and UE configuration for SNPN selection, e.g., a Credentials Holder controlled prioritized list of preferred SNPNs. Further, an SNPN-enabled UE that supports access to an SNPN using credentials from a Credentials Holder and that is equipped with a PLMN subscription (USIM) may additionally be configured with information for SNPN selection and registration using the PLMN subscription (USIM) (in SNPN access mode).

When an SNPN-enabled UE is set to operate in SNPN access mode, the UE only selects and registers with SNPNs. There are two SNPN network selection procedures: an automatic SNPN network selection procedure and a manual SNPN network selection procedure. Under automatic SNPN network selection, UE selects and attempts registration on available and allowable SNPNs in predefined order. Under manual network selection, UEs operating in SNPN access mode provide to the user the list of SNPNs (each is identified by a PLMN ID and NID) and related human-readable network names (if available) of the available SNPNs the UE has respective SUPI and credentials for. If the UEs supports access to an SNPN using credentials from a Credentials Holder, the UE also presents available SNPNs which broadcast the "access using credentials from a Credentials Holder is supported" indication.

In 5GS, a protocol data unit (PDU) session defines the association between the UE and the data network that provides a PDU connectivity service. Each PDU session can be established via a 5G access network (e.g.,3GPP radio access network (RAN), or via a non-3GPP access). The network and /or the UE can initiate different PDU session procedures, e.g., PDU session establishment, PDU session modification, and PDU session release, for managing the activation and deactivation of 5GS PDU sessions. The UE can only maintain a maximum number of PDU sessions in a PLMN or SNPN. When the number of active 5GS PDU sessions reach the network's (PLMN or SNPN) maximum number of 5GS PDU sessions, the UE should not send requests to establish additional PDU sessions.

If UE supports access to an SNPN using credentials from a Credential Holder, during an SNPN selection process, the UE also needs to select an appropriate subscription (subscriber identifier + credentials) to access/register to the selected SNPN. This is because the UE may have multiple subscriptions that can be used to access/register to the selected SNPN. A subscription can be an SNPN subscription or a PLMN subscription. In accordance with one novel aspect, a method of handling the maximum number of PDU sessions per SNPN per subscription is proposed. The UE has multiple subscriptions to access a selected SNPN, then the UE maintains a maximum number of PDU session for the selected SNPN with respect to each selected subscription independently. If the UE selects a first subscription to access the selected SNPN, then the UE should not send a PDU session establishment request message if the number of active PDU sessions has reached the maximum number of PDU sessions for the selected SNPN associated with the first subscription, e.g., a first number. Similarly, if the UE selects a second subscription to access the selected SNPN, then the UE should not send a PDU session establishment request message if the number of active PDU sessions has reached the maximum number of PDU sessions for the selected SNPN associated with the second subscription, e.g., a second number.

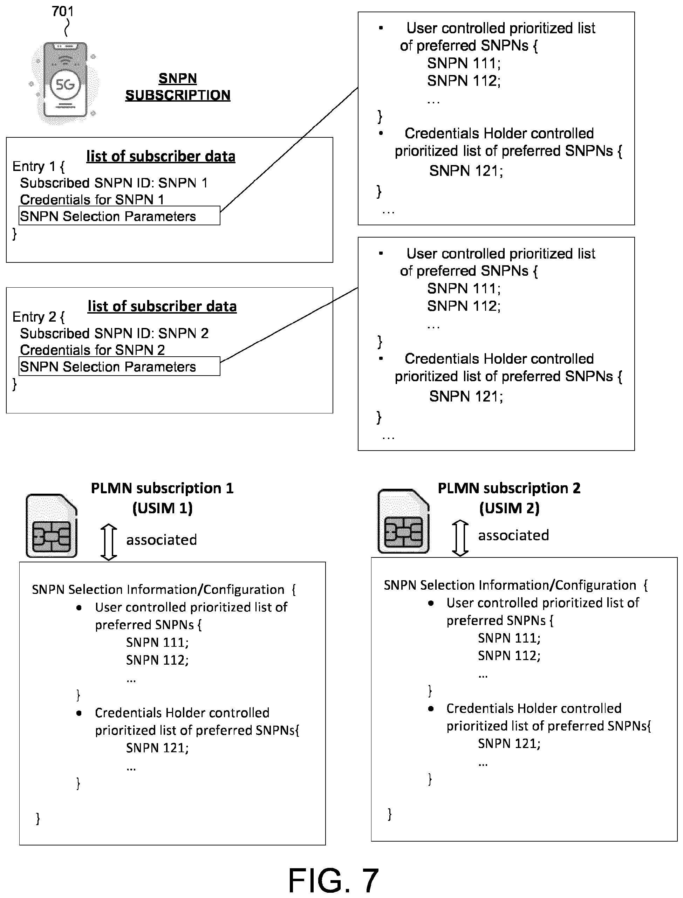

Figure 7 illustrates an embodiment of UE registering to a selected SNPN using a selected subscription from multiple SNPN or PLMN subscriptions. In the example of Figure 7, UE 701 is configured with SNPN subscription(s), the list of subscriber data includes two entries (i.e., two SNPN subscriptions): a first entry (Entry 1) for subscribed SNPN 1 with a user controlled prioritized list of referred SNPNs (SNPN 111, SNPN 112), and a credential holder controlled prioritized list of preferred SNPNS (SNPN 121), the list belongs to the SNPN selection parameters of the first entry (Entry 1) stored in the UE, and a second entry (Entry 2) for SNPN 2 with a user controlled prioritized list of referred SNPNs (SNPN 111, SNPN 112), and a credential holder controlled prioritized list of preferred SNPNS (SNPN 121), the list belongs to the SNPN selection parameters of the second entry (Entry 2) stored in the UE.

UE 701 is also equipped with PLMN subscription(s) (USIM(s)), and is configured with information for SNPN selection (SNPN selection parameters) and registration using the PLMN subscription(s) (USIM(s)) in SNPN access mode. PLMN subscription 1 (USIM1) is associated with SNPN selection information comprising a user controlled prioritized list of referred SNPNs (SNPN 111, SNPN 112), and a credential holder controlled prioritized list of preferred SNPNS (SNPN 121), the lists belong to the SNPN selection parameters (for access in SNPN) of the USIM1 stored in the UE, and PLMN subscription 2 (USIM2) is associated with SNPN selection information comprising a user controlled prioritized list of referred SNPNs (SNPN 111, SNPN 112), and a credential holder controlled prioritized list of preferred SNPNS (SNPN 121), the lists belong to the SNPN selection parameters (for access in SNPN) of the USIM2 stored in the UE.

In a first example, UE selects Entry 1 of "list of subscriber data" to access/register SNPN 121. During a UE-requested PDU session establishment procedure, the 5GSM sublayer in the UE receives an indication that the 5GSM message was not forwarded because the SNPN's maximum number of PDU sessions has been reached. UE determines the SNPN's maximum number of PDU sessions as the number of active PDU sessions it has (e.g.: 3) and associates the determined maximum number of PDU sessions with the selected Entry 1 of the "list of subscriber data".

In a second example, UE selects Entry 2 of "list of subscriber data" to access/register SNPN 121. During a UE-requested PDU session establishment procedure, the 5GSM sublayer in the UE receives an indication that the 5GSM message was not forwarded because the SNPN's maximum number of PDU sessions has been reached. UE determines the SNPN's maximum number of PDU sessions as the number of active PDU sessions it has (e.g.: 4) and associates the determined maximum number of PDU sessions with the selected Entry 2 of the "list of subscriber data".

In a third example, UE selects PLMN subscription 1 (USIM 1), to access/register SNPN 121. During a UE-requested PDU session establishment procedure, the 5GSM sublayer in the UE receives an indication that the 5GSM message was not forwarded because the SNPN's maximum number of PDU sessions has been reached. UE determines the SNPN's maximum number of PDU sessions as the number of active PDU sessions it has (e.g.: 5) and associates the determined maximum number of PDU sessions with the selected PLMN subscription 1 (USIM 1).

In a fourth example, UE selects PLMN subscription 2 (USIM 2), to access/register SNPN 121. During a UE-requested PDU session establishment procedure, the 5GSM sublayer in the UE receives an indication that the 5GSM message was not forwarded because the SNPN's maximum number of PDU sessions has been reached. UE determines the SNPN's maximum number of PDU sessions as the number of active PDU sessions it has (e.g.: 6) and associates the determined maximum number of PDU sessions with the selected PLMN subscription 2 (USIM 2).

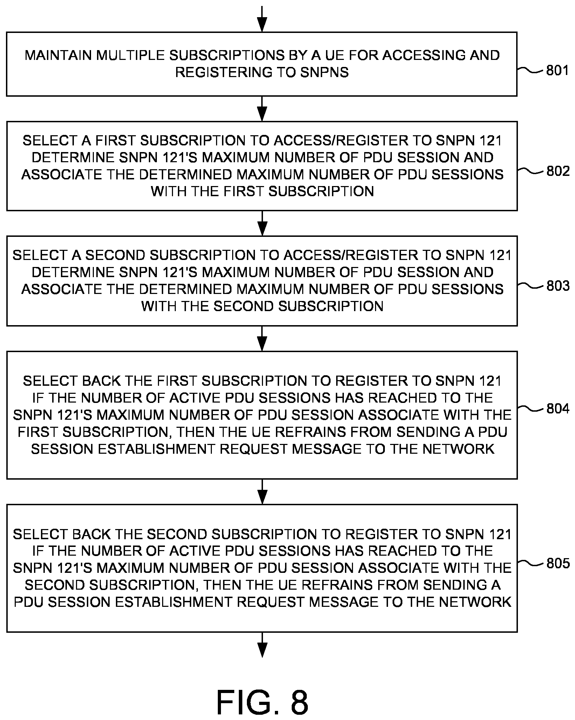

Figure 8 is a flow chart of a method of using multiple subscriptions to access/register to a selected SNPN and corresponding maximum number of PDU session handling in accordance with one novel aspect. In step 801, a UE maintains multiple subscriptions, e.g., zero, one or more SNPN subscription(s) (the "list of subscriber data") and/or zero, one or more PLMN subscription(s) (USIM(s)) for access to SNPNs. In step 802, the UE selects a first subscription to register to a 1^{st} SNPN (e.g., SNPN 121). During a UE-requested PDU session establishment procedure the 5GSM sublayer in the UE receives an indication that the 5GSM message was not forwarded because the SNPN's maximum number of PDU sessions has been reached. UE determines the 1^{st} SNPN's maximum number of PDU sessions as the number of active PDU sessions it has (a 1^{st} number) and associates the determined maximum number of PDU sessions with the 1^{st} subscription. In step 803, the UE selects a 2^{nd} subscription to register to the 1^{st} SNPN (e.g., SNPN 121). During a UE-requested PDU session establishment procedure the 5GSM sublayer in the UE receives an indication that the 5GSM message was not forwarded because the SNPN's maximum number of PDU sessions has been reached. UE determines the 1^{st} SNPN's maximum number of PDU sessions as the number of active PDU sessions it has (a 2^{nd} number) and associates the determined maximum number of PDU sessions with the 2^{nd} subscription.

In step 804, the UE selected back to the 1^{st} subscription, to access/register the 1^{st} SNPN (ex: SNPN 121). If the maximum number of PDU sessions as the number of active PDU sessions it has is equals to the 1^{st} number, and if the upper layers of the UE request connectivity to a DNN, then the UE shall not send a PDU SESSION ESTABLISHMENT REQUEST message. In step 805, the UE selected back to the 2^{nd} subscription, to access/register the 1^{st} SNPN (ex: SNPN 121). If the maximum number of PDU sessions as the number of active PDU sessions it has is equals to the 2^{nd} number, and if the upper layers of the UE request connectivity to a DNN, then the UE shall not send a PDU SESSION ESTABLISHMENT REQUEST message. In one embodiment, the first or the second subscription is an SNPN subscription and is contained in an entry of a list of subscriber data for SNPN. In another embodiment, the first or the second subscription is a PLMN subscription of a Universal Subscription Identification Module (USIM).

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
maintaining (801) multiple subscriptions by a user equipment (201), UE, for accessing standalone non-public networks, SNPNs, wherein the UE (201) supports access to the SNPNs using credentials from a Credentials Holder;
selecting (802) a first subscription to access a selected SNPN, wherein the UE (201) maintains a first maximum number of PDU sessions for the selected SNPN associated with the first subscription; and
selecting (803) a second subscription to access the selected SNPN, wherein the UE (201) maintains a second maximum number of PDU sessions for the selected SNPN associated with the second subscription;
wherein:
if the UE (201) selects the first subscription to access the selected SNPN, then the UE (201) refrains from sending a PDU SESSION ESTABLISHMENT REQUEST message when the number of active PDU sessions has reached the maintained first maximum number of PDU sessions; or
if the UE (201) selects the second subscription to access the selected SNPN, then the UE (201) refrains from sending the PDU SESSION ESTABLISHMENT REQUEST message when the number of active PDU sessions has reached the maintained second maximum number of PDU sessions.

2. The method of Claim 1, wherein the selected SNPN is included in a user controlled list of SNPNs of a UE configuration for SNPN selection.

3. The method of Claim 1, wherein the selected SNPN is included in a credential holder controlled list of SNPNs of a UE configuration for SNPN selection.

4. The method of Claim 1, wherein the first or the second subscription is an SNPN subscription and is contained in an entry of a list of subscriber data for SNPN, or wherein the first or the second subscription is a PLMN subscription of a Universal Subscription Identification Module, USIM.

5. The method of Claim 1, wherein the UE (201) is registered to the selected SNPN using the first subscription, and wherein the UE (201) receives an indication that a number of active PDU sessions has reached the first maximum number of PDU sessions of the selected SNPN during a PDU session establishment procedure.

6. The method of Claim 1, wherein the UE (201) is registered to the selected SNPN using the second subscription, and wherein the UE (201) receives an indication that a number of active PDU sessions has reached the second maximum number of PDU sessions of the selected SNPN during a PDU session establishment procedure.

7. A User Equipment (201), UE, comprising:
a standalone non-public network, SNPN, information handling circuit (223) that is adapted to maintain multiple subscriptions for accessing SNPNs, wherein the UE (201) is adapted to support access to the SNPNs using credentials from a Credentials Holder;
a control circuit (224) that is adapted to select a first subscription to access a selected SNPN, wherein the UE (201) is adapted to maintain a first maximum number of PDU sessions for the selected SNPN associated with the first subscription, wherein the control circuit (224) is also adapted to select a second subscription to access the selected SNPN, and wherein the UE (201) is adapted to maintain a second maximum number of PDU sessions for the selected SNPN associated with the second subscription;
wherein:
the UE (201) is further adapted to, if the control circuit selects the first subscription to access the selected SNPN, then refrain from sending a PDU SESSION ESTABLISHMENT REQUEST message when the number of active PDU sessions has reached the maintained first maximum number of PDU sessions; or
the UE (201) is further adapted to, if the control circuit selects the second subscription to access the selected SNPN, then refrain from sending the PDU SESSION ESTABLISHMENT REQUEST message when the number of active PDU sessions has reached the maintained second maximum number of PDU sessions.

8. The UE (201) of Claim 7, wherein the selected SNPN is included in a user controlled list of SNPNs of a UE configuration for SNPN selection, or wherein the selected SNPN is included in a credential holder controlled list of SNPNs of a UE configuration for SNPN selection.

9. The UE (201) of Claim 7, wherein the first or the second subscription is an SNPN subscription and is contained in an entry of a list of subscriber data for SNPN, or wherein the first or the second subscription is a PLMN subscription of a Universal Subscription Identification Module, USIM.

10. The UE (201) of Claim 7, wherein the UE (201) is adapted to register to the selected SNPN using the first subscription, and wherein the UE (201) is adapted to receive an indication that a number of active PDU sessions has reached the first maximum number of PDU sessions of the selected SNPN during a PDU session establishment procedure.

11. The UE (201) of Claim 7, wherein the UE (201) is adapted to register to the selected SNPN using the second subscription, and wherein the UE (201) is adapted to receive an indication that a number of active PDU sessions has reached the second maximum number of PDU sessions of the selected SNPN during a PDU session establishment procedure.

## Patentansprüche

1. Verfahren, umfassend:
Aufrechterhalten (801) mehrerer Abonnements durch ein Benutzergerät (201), UE, zum Zugriff auf eigenständige nicht-öffentliche Netzwerke, SNPNs, wobei das UE (201) den Zugriff auf die SNPNs unter Verwendung von Anmeldeinformationen eines Anmeldeinformationsinhabers unterstützt;
Auswählen (802) eines ersten Abonnements zum Zugriff auf ein ausgewähltes SNPN, wobei das UE (201) eine erste maximale Anzahl von PDU-Sitzungen für das ausgewählte SNPN aufrechterhält, das dem ersten Abonnement zugeordnet ist; und
Auswählen (803) eines zweiten Abonnements zum Zugriff auf das ausgewählte SNPN, wobei das UE (201) eine zweite maximale Anzahl von PDU-Sitzungen für das ausgewählte SNPN aufrechterhält, das mit dem zweiten Abonnement verknüpft ist;
wobei:
falls das UE (201) das erste Abonnement zum Zugriff auf das ausgewählte SNPN auswählt, dann das UE (201) das Senden einer PDU SESSION ESTABLISHMENT REQUEST-Nachricht unterlässt, wenn die Anzahl der aktiven PDU-Sitzungen die aufrechterhaltene erste maximale Anzahl von PDU-Sitzungen erreicht hat; oder
falls das UE (201) das zweite Abonnement zum Zugriff auf das ausgewählte SNPN auswählt, dann das UE (201) das Senden der PDU SESSION ESTABLISHMENT REQUEST-Nachricht unterlässt, wenn die Anzahl der aktiven PDU-Sitzungen die aufrechterhaltene zweite maximale Anzahl von PDU-Sitzungen erreicht hat.

2. Verfahren nach Anspruch 1, wobei das ausgewählte SNPN in einer benutzergesteuerten Liste von SNPNs einer UE-Konfiguration zur SNPN-Auswahl enthalten ist.

3. Verfahren nach Anspruch 1, wobei das ausgewählte SNPN in einer vom Anmeldeinformationsinhaber gesteuerten Liste von SNPNs einer UE-Konfiguration zur SNPN-Auswahl enthalten ist.

4. Verfahren nach Anspruch 1, wobei das erste oder das zweite Abonnement ein SNPN-Abonnement ist und in einem Eintrag einer Liste mit Teilnehmerdaten für SNPN enthalten ist, oder wobei das erste oder das zweite Abonnement ein PLMN-Abonnement eines Universal Subscription Identification Module, USIM, ist.

5. Verfahren nach Anspruch 1, wobei das UE (201) unter Verwendung des ersten Abonnements bei dem ausgewählten SNPN registriert ist und wobei das UE (201) eine Anzeige empfängt, dass eine Anzahl aktiver PDU-Sitzungen die erste maximale Anzahl von PDU-Sitzungen des ausgewählten SNPN während eines PDU-Sitzungsaufbauvorgangs erreicht hat.

6. Verfahren nach Anspruch 1, wobei das UE (201) unter Verwendung des zweiten Abonnements bei dem ausgewählten SNPN registriert ist und wobei das UE (201) eine Anzeige empfängt, dass eine Anzahl aktiver PDU-Sitzungen die zweite maximale Anzahl von PDU-Sitzungen des ausgewählten SNPN während eines PDU-Sitzungsaufbauvorgangs erreicht hat.

7. Benutzergerät (201), UE, umfassend:
eine eigenständige Informationsverarbeitungsschaltung (223) für ein nicht-öffentliches Netzwerk (SNPN), die ausgebildet ist, mehrere Abonnements zum Zugriff auf SNPNs aufrechtzuerhalten, wobei das UE (201) ausgebildet ist, den Zugriff auf die SNPNs unter Verwendung von Anmeldeinformationen eines Anmeldeinformationsinhabers zu unterstützen;
eine Steuerschaltung (224), die ausgebildet ist, ein erstes Abonnement zum Zugriff auf ein ausgewähltes SNPN auszuwählen, wobei das UE (201) ausgebildet ist, eine erste maximale Anzahl von PDU-Sitzungen für das ausgewählte SNPN aufrechtzuerhalten, das dem ersten Abonnement zugeordnet ist, wobei die Steuerschaltung (224) auch ausgebildet ist, ein zweites Abonnement zum Zugriff auf das ausgewählte SNPN auszuwählen, und wobei das UE (201) ausgebildet ist, eine zweite maximale Anzahl von PDU-Sitzungen für das ausgewählte SNPN aufrechtzuerhalten, das dem zweiten Abonnement zugeordnet ist;
wobei:
das UE (201) ferner ausgebildet ist, falls die Steuerschaltung das erste Abonnement zum Zugriff auf das ausgewählte SNPN auswählt, dann das Senden einer PDU SESSION ESTABLISHMENT REQUEST-Nachricht zu unterlassen, wenn die Anzahl der aktiven PDU-Sitzungen die aufrechterhaltene erste maximale Anzahl von PDU-Sitzungen erreicht hat; oder
das UE (201) ferner ausgebildet ist, falls die Steuerschaltung das zweite Abonnement für den Zugriff auf das ausgewählte SNPN auswählt, dann das Senden der PDU SESSION ESTABLISHMENT REQUEST-Nachricht zu unterlassen, wenn die Anzahl der aktiven PDU-Sitzungen die aufrechterhaltene zweite maximale Anzahl von PDU-Sitzungen erreicht hat.

8. UE (201) nach Anspruch 7, wobei das ausgewählte SNPN in einer benutzergesteuerten Liste von SNPNs einer UE-Konfiguration zur SNPN-Auswahl enthalten ist oder wobei das ausgewählte SNPN in einer vom Anmeldeinformationsinhaber gesteuerten Liste von SNPNs einer UE-Konfiguration zur SNPN-Auswahl enthalten ist.

9. UE (201) nach Anspruch 7, wobei das erste oder das zweite Abonnement ein SNPN-Abonnement ist und in einem Eintrag einer Liste mit Teilnehmerdaten für SNPN enthalten ist, oder wobei das erste oder das zweite Abonnement ein PLMN-Abonnement eines Universal Subscription Identification Module, USIM, ist.

10. UE (201) nach Anspruch 7, wobei das UE (201) ausgebildet ist, sich unter Verwendung des ersten Abonnements bei dem ausgewählten SNPN zu registrieren, und wobei das UE (201) ausgebildet ist, eine Anzeige zu empfangen, dass eine Anzahl aktiver PDU-Sitzungen die erste maximale Anzahl von PDU-Sitzungen des ausgewählten SNPN während eines PDU-Sitzungsaufbauvorgangs erreicht hat.

11. UE (201) nach Anspruch 7, wobei das UE (201) ausgebildet ist, sich unter Verwendung des zweiten Abonnements bei dem ausgewählten SNPN zu registrieren, und wobei das UE (201) ausgebildet ist, eine Anzeige zu empfangen, dass eine Anzahl aktiver PDU-Sitzungen die zweite maximale Anzahl von PDU-Sitzungen des ausgewählten SNPN während eines PDU-Sitzungsaufbauvorgangs erreicht hat.

## Revendications

1. Procédé, comprenant :
maintenir (801) plusieurs abonnements par un équipement utilisateur (201), UE, pour accéder à des réseaux non publics autonomes, SNPN, dans lequel l'UE (201) prend en charge l'accès aux SNPN à l'aide d'informations d'identification d'un détenteur d'informations d'identification ;
sélectionner (802) un premier abonnement pour accéder à un SNPN sélectionné, l'UE (201) conservant un premier nombre maximal de sessions PDU pour le SNPN sélectionné associé au premier abonnement ; et
sélectionner (803) un deuxième abonnement pour accéder au SNPN sélectionné, dans lequel l'UE (201) maintient un deuxième nombre maximal de sessions PDU pour le SNPN sélectionné associé au deuxième abonnement ;
dans lequel :
si l'UE (201) sélectionne le premier abonnement pour accéder au SNPN sélectionné, alors l'UE (201) s'abstient d'envoyer un message PDU SESSION ESTABLISHMENT REQUEST lorsque le nombre de sessions PDU actives a atteint le premier nombre maximal maintenu de sessions PDU ; ou
si l'UE (201) sélectionne le deuxième abonnement pour accéder au SNPN sélectionné, alors l'UE (201) s'abstient d'envoyer le message PDU SESSION ESTABLISHMENT REQUEST lorsque le nombre de sessions PDU actives a atteint le deuxième nombre maximal maintenu de sessions PDU.

2. Procédé selon la revendication 1, dans lequel le SNPN sélectionné est inclus dans une liste contrôlée par l'utilisateur de SNPN d'une configuration UE pour la sélection de SNPN.

3. Procédé selon la revendication 1, dans lequel le SNPN sélectionné est inclus dans une liste contrôlée par le titulaire d'informations d'identification de SNPN d'une configuration UE pour la sélection de SNPN.

4. Procédé selon la revendication 1, dans lequel le premier ou le deuxième abonnement est un abonnement SNPN et est contenu dans une entrée d'une liste de données d'abonné pour SNPN, ou dans lequel le premier ou le deuxième abonnement est un abonnement PLMN d'un module d'identification d'abonnement universel, USIM.

5. Procédé selon la revendication 1, dans lequel l'UE (201) est enregistré auprès du SNPN sélectionné à l'aide du premier abonnement, et dans lequel l'UE (201) reçoit une indication selon laquelle un nombre de sessions PDU actives a atteint le premier nombre maximal de sessions PDU du SNPN sélectionné pendant une procédure d'établissement de session PDU.

6. Procédé selon la revendication 1, dans lequel l'UE (201) est enregistré auprès du SNPN sélectionné à l'aide du second abonnement, et dans lequel l'UE (201) reçoit une indication selon laquelle un nombre de sessions PDU actives a atteint le second nombre maximal de sessions PDU du SNPN sélectionné pendant une procédure d'établissement de session PDU.

7. Équipement utilisateur (201), UE, comprenant :
un circuit de traitement d'informations de réseau non public autonome, SNPN (223) qui est adapté pour maintenir plusieurs abonnements pour accéder aux SNPN, dans lequel l'UE (201) est adapté pour prendre en charge l'accès aux SNPN à l'aide d'informations d'identification d'un détenteur d'informations d'identification ;
un circuit de commande (224) qui est adapté pour sélectionner un premier abonnement pour accéder à un SNPN sélectionné, dans lequel l'UE (201) est adapté pour maintenir un premier nombre maximal de sessions PDU pour le SNPN sélectionné associé au premier abonnement, dans lequel le circuit de commande (224) est également adapté pour sélectionner un second abonnement pour accéder au SNPN sélectionné, et dans lequel l'UE (201) est adapté pour maintenir un second nombre maximal de sessions PDU pour le SNPN sélectionné associé au second abonnement ;
dans lequel :
l'UE (201) est en outre adapté pour, si le circuit de contrôle sélectionne le premier abonnement pour accéder au SNPN sélectionné, s'abstenir d'envoyer un message de DEMANDE D'ÉTABLISSEMENT DE SESSION PDU lorsque le nombre de sessions PDU actives a atteint le premier nombre maximal maintenu de sessions PDU ; ou
l'UE (201) est en outre adapté pour, si le circuit de commande sélectionne le deuxième abonnement pour accéder au SNPN sélectionné, s'abstenir d'envoyer le message PDU SESSION ESTABLISHMENT REQUEST lorsque le nombre de sessions PDU actives a atteint le deuxième nombre maximal maintenu de sessions PDU.

8. UE (201) selon la revendication 7, dans lequel le SNPN sélectionné est inclus dans une liste contrôlée par l'utilisateur de SNPN d'une configuration d'UE pour la sélection de SNPN, ou dans lequel le SNPN sélectionné est inclus dans une liste contrôlée par le titulaire d'informations d'identification de SNPN d'une configuration d'UE pour la sélection de SNPN.

9. UE (201) selon la revendication 7, dans lequel le premier ou le deuxième abonnement est un abonnement SNPN et est contenu dans une entrée d'une liste de données d'abonné pour SNPN, ou dans lequel le premier ou le deuxième abonnement est un abonnement PLMN d'un module d'identification d'abonnement universel, USIM.

10. UE (201) selon la revendication 7, dans lequel l'UE (201) est adapté pour s'enregistrer auprès du SNPN sélectionné en utilisant le premier abonnement, et dans lequel l'UE (201) est adapté pour recevoir une indication selon laquelle un nombre de sessions PDU actives a atteint le premier nombre maximal de sessions PDU du SNPN sélectionné pendant une procédure d'établissement de session PDU.

11. UE (201) selon la revendication 7, dans lequel l'UE (201) est adapté pour s'enregistrer auprès du SNPN sélectionné à l'aide du second abonnement, et dans lequel l'UE (201) est adapté pour recevoir une indication selon laquelle un nombre de sessions PDU actives a atteint le second nombre maximal de sessions PDU du SNPN sélectionné pendant une procédure d'établissement de session PDU.
